# EUROPÄISCHE PATENTSCHRIFT

(11) **EP 3 987 377 B1**
(45) Veröffentlichungstag und Bekanntmachung des Hinweises auf die Patenterteilung: **19.03.2025**
(21) Anmeldenummer: 19752946.4
(22) Anmeldetag: 25.07.2019
(51) Int. Cl.: G05D 7/06

(54) **FÖRDERANORDNUNG MIT ZWEI PARALLEL GESCHALTETEN FÖRDERELEMENTEN**
CONVEYOR ASSEMBLY WITH TWO CONVEYOR ELEMENTS CONNECTED IN PARALLEL
AGENCEMENT DE TRANSPORT AYANT DEUX ÉLÉMENTS DE TRANSPORT MONTÉS EN PARALLÈLE

(43) Veröffentlichungstag der Anmeldung: 27.04.2022
(73) Patentinhaber: Siemens Aktiengesellschaft, 80333 München (DE)
(72) Erfinder: PFEIFFER, Bernd-Markus, 91080 Uttenreuth (DE)
(74) Vertreter: Siemens Patent Attorneys
(86) Internationale Anmeldenummer: PCT/EP2019/070076
(87) Internationale Veröffentlichungsnummer: WO 2021/013355

(56) Entgegenhaltungen:
- EP-A1- 1 081 570
- JP-A- 2001 175 336
- US-A1- 2012 111 412

## Beschreibung

Die vorliegende Erfindung geht aus von einer Förderanordnung für ein Medium,
- wobei die Förderanordnung eine Förderleitung aufweist, über die das Medium von einem Quellort zu einem Zielort gefördert wird,
- wobei die Förderleitung zwischen dem Quellort und dem Zielort einen Förderabschnitt aufweist,
- wobei in dem Förderabschnitt ein Förderelement angeordnet ist,
- wobei das Förderelement von einem Durchflussregler geregelt wird,
- wobei dem Durchflussregler ein Durchfluss-Sollwert und ein Durchfluss-Istwert zugeführt werden,
- wobei der Durchflussregler anhand des Durchfluss-Sollwerts und des Durchfluss-Istwerts unter Verwendung eines Regelalgorithmus eine Stellgröße für die Pumpe berechnet.

In vielen Fällen muss ein Medium - insbesondere eine Flüssigkeit - mittels eines Förderelements von einem Quellort zu einem Zielort gefördert werden. Beispielsweise muss Öl oder Wasser von einem ersten in einen zweiten Tank umgefüllt werden. Das Förderelement ist bei einem flüssigen Medium eine Pumpe. Die Pumpe ist bei größeren Volumenströmen in der Regel als Kreiselpumpe ausgebildet. Bei einem gasförmigen Medium ist das Förderelement in der Regel ein Kompressor, ein Verdichter oder ein Gebläse.

In manchen Fällen kann ein ungeregeltes Fördern des Mediums erfolgen. Oftmals muss jedoch ein ganz bestimmter Medienstrom eingestellt werden, beispielsweise 100 Liter pro Sekunde (wobei der genannte Zahlenwert rein beispielhaft zu verstehen ist).

Zum geregelten Fördern wird in der einfachsten Ausgestaltung das Förderelement mit konstanter Drehzahl betrieben und wird weiterhin ein stetig einstellbarer Widerstand, der vor oder hinter dem Förderelement in der Förderleitung angeordnet ist, entsprechend eingestellt. Im Falle einer Pumpe, die ein flüssiges Medium fördert, kann dies beispielsweise ein einstellbares Ventil sein. Diese Lösung ist zwar einfach, jedoch in energetischer Hinsicht sehr ineffizient. Insbesondere wird das Förderelement permanent mit voller Leistung betrieben, so dass es in der Lage ist, den maximalen geforderten Durchfluss fördern zu können. Weiterhin sind dieser Vorgehensweise zu kleineren Durchflüssen hin Grenzen gesetzt, da bei zu starker Drosselung Turbulenzen in der Strömung auftreten können und darüber hinaus sogar im Falle der Verwendung eines Ventils im Ventilspalt Kavitation auftreten kann. Kavitation führt zu erheblichem Verschleiß.

Eine verbesserte Lösung besteht darin, das Förderelement mit variabler Drehzahl zu betreiben. In diesem Fall wird das Förderelement, wie obenstehend erwähnt, von einem Durchflussregler geregelt, wobei dem Durchflussregler ein Durchfluss-Sollwert und ein Durchfluss-Istwert zugeführt werden und der Durchflussregler anhand des Durchfluss-Sollwerts und des Durchfluss-Istwerts unter Verwendung eines Regelalgorithmus eine Stellgröße für das Förderelement berechnet. Das Förderelement (genauer: der Antrieb des Förderelements) wird in diesem Fall von dem Durchflussregler entsprechend der Stellgröße angesteuert. Die Stellgröße ist eine Drehzahl des Förderelements bzw. von dessen Antrieb.

Die letztgenannte Vorgehensweise ist sehr effizient, sofern der Durchfluss nur in relativ engen Grenzen verstellt werden muss. Denn in diesem Fall können das Förderelement und dessen Antrieb auf den geforderten Durchfluss, der voraussetzungsgemäß nur in relativ engen Grenzen verstellt werden muss, hin optimiert werden. Ein Verhältnis zwischen einem maximal auftretenden Durchfluss und einem minimal auftretenden Durchfluss sollte in diesem Fall beispielsweise bei einer Flüssigkeit als Medium ein Verhältnis von höchstens 5:1 aufweisen, besser sogar nur von 4:1 oder weniger, beispielsweise von 2:1.

Sofern das genannte Verhältnis größer wird, beispielsweise 5:1 und mehr beträgt, ist ein entsprechender Betrieb des Förderelements zwar - zumindest in manchen Fällen - prinzipiell noch möglich. Ein derartiger Betrieb ist bei relativ kleinen auftretenden Durchflüssen jedoch energieineffizient, da sowohl das Förderelement als solches als auch der Antrieb des Förderelements auf eine bestimmte Drehzahl ausgelegt sind und bei deutlich geringeren Drehzahlen einen deutlich verringerten Wirkungsgrad aufweisen. Weiterhin kann das Förderelement in der Regel unterhalb eines minimalen Durchflusses nicht betrieben werden.

In der JP 2001 175336 A ist ein Verfahren zum Regeln eines Ventils offenbart, welches eine Durchflussrate über einen weiten Bereich regeln kann.

Die Aufgabe der vorliegenden Erfindung besteht darin, eine Möglichkeit zu schaffen, aufgrund derer auch bei einem großen Verhältnis zwischen einem maximal geforderten Durchfluss und einem minimal geforderten Durchfluss zum einen prinzipiell ein Betrieb möglich ist und weiterhin auch ein effizienter Betrieb einer entsprechend ausgestalteten Förderanordnung möglich ist.

Die Aufgabe wird durch eine Förderanordnung mit den Merkmalen des Anspruchs 1 gelöst. Vorteilhafte Ausgestaltungen der erfindungsgemäßen Förderanordnung sind Gegenstand der abhängigen Ansprüche 2 bis 4.

Bei der erfindungsgemäßen Förderanordnung für ein Medium ist vorgesehen,
- dass die Förderanordnung eine Förderleitung aufweist, über die das Medium von einem Quellort zu einem Zielort gefördert wird,
- dass die Förderleitung zwischen dem Quellort und dem Zielort einen Förderabschnitt aufweist,
- dass in dem Förderabschnitt zwei Förderelemente angeordnet sind, die als Pumpen, Kompressoren, Verdichter oder Gebläse ausgebildet sind,
- dass die Förderelemente einander parallel geschaltet sind,
- dass die Förderelemente von einem jeweiligen Durchflussregler geregelt werden,
- dass beiden Durchflussreglern ein für beide Durchflussregler einheitlicher Durchfluss-Sollwert und ein für beide Durchflussregler einheitlicher Durchfluss-Istwert zugeführt werden,
- dass die Durchflussregler anhand des Durchfluss-Sollwerts und des Durchfluss-Istwerts unter Verwendung eines jeweiligen Regelalgorithmus eine jeweiligen Stellgröße für das jeweilige Förderelement berechnen,
- dass die Fördereinrichtung eine Umschalteinrichtung aufweist, welcher der Durchfluss-Sollwert zugeführt wird,
- dass die Umschalteinrichtung derart ausgebildet ist, dass zu jedem Zeitpunkt nur eines der beiden Förderelemente entsprechend der Stellgröße des zugehörigen Durchflussreglers gesteuert wird, während das andere Förderelement nicht angesteuert wird,
- dass die Umschalteinrichtung derart ausgebildet ist, dass sie bei einem Absinken des Durchfluss-Sollwerts unter eine untere Schaltschwelle das Ansteuern des einen Förderelements durch den einen Durchflussregler unterdrückt und das Ansteuern des anderen Förderelements durch den anderen Durchflussregler freigibt, so dass das Medium ausschließlich über das andere Förderelement fließt, solange der Durchfluss-Sollwert oberhalb eines Minimalwerts und unterhalb einer oberen Schaltschwelle bleibt, und
- dass die Umschalteinrichtung derart ausgebildet ist, dass sie bei einem Ansteigen des Durchfluss-Sollwerts über die obere Schaltschwelle das Ansteuern des anderen Förderelements durch den anderen Durchflussregler unterdrückt und das Ansteuern des einen Förderelements durch den einen Durchflussregler freigibt, so dass das Medium ausschließlich über das eine Förderelement fließt, solange der Durchfluss-Sollwert unterhalb eines Maximalwerts und oberhalb der unteren Schaltschwelle bleibt.

Erfindungsgemäß werden also zwei Förderelemente einander parallel geschaltet. Die Förderelemente sind im Falle von Pumpen in der Regel als Kreiselpumpen ausgebildet. In jedem Fall aber sind die Förderelemente unterschiedlich dimensioniert. Da die beiden Förderelemente unterschiedlich dimensioniert sind, kann ohne Beschränkung der Allgemeinheit eines der beiden Förderelemente als großes Förderelement bezeichnet werden, das andere Förderelement als kleines Förderelement. Den Förderelementen sind als Antriebe drehzahlvariable Antriebe zugeordnet. Die Antriebe können insbesondere umrichtergesteuerte elektrische Antriebe sein. Jedes Förderelement wird von einem eigenen Durchflussregler geregelt, wobei der jeweilige Durchflussregler optimiert für die Ansteuerung und den Betrieb des jeweiligen Förderelements parametriert sein kann. Beiden Durchflussreglern werden jedoch derselbe Durchfluss-Sollwert und derselbe Durchfluss-Istwert zugeführt. Zu jedem Zeitpunkt wird aber nur eines der beiden Förderelemente entsprechend der Stellgröße des zugehörigen Durchflussreglers gesteuert. Das jeweils andere Förderelement wird nicht angesteuert.

Man nehme an, zu einem bestimmten Zeitpunkt werde das große Förderelement angesteuert. Dieser Zustand wird beibehalten, bis der Durchfluss-Sollwert unter die untere Schaltschwelle absinkt. Das Unterschreiten der unteren Schaltschwelle wird von der Umschalteinrichtung überwacht. Unterschreitet der Durchfluss-Sollwert die untere Schaltschwelle, wird ab diesem Zeitpunkt nicht mehr das große Förderelement entsprechend der Stellgröße des ihm zugeordneten Durchflussreglers angesteuert, sondern es wird auf das kleine Förderelement umgeschaltet, so dass das kleine Förderelement von dem ihm zugeordneten Durchflussregler angesteuert wird. Dieser Zustand wird nunmehr beibehalten, bis der Durchfluss-Sollwert über die obere Schaltschwelle ansteigt. Auch das Überschreiten der oberen Schaltschwelle wird von der Umschalteinrichtung überwacht. Überschreitet der Durchfluss-Sollwert die obere Schaltschwelle, wird ab diesem Zeitpunkt wieder nicht mehr das kleine Förderelement entsprechend der Stellgröße des ihm zugeordneten Durchflussreglers angesteuert, sondern es wird wieder auf das große Förderelement umgeschaltet, so dass das große Förderelement entsprechend der Stellgröße des ihm zugeordneten Durchflussreglers angesteuert wird.

Die untere Schaltschwelle darf selbstverständlich nicht größer als die obere Schaltschwelle sein. Die beiden Schaltschwellen können aber den gleichen Wert aufweisen. Vorzugsweise jedoch ist die obere Schaltschwelle sogar größer als die untere Schaltschwelle. Dadurch wird ein Hysterese-Verhalten erreicht, so dass ein stabiler Betrieb der Förderanordnung gewährleistet ist. In jedem Fall aber ist der Maximalwert größer als jede der beiden Schaltschwellen und ist der Minimalwert kleiner als jede der beiden Schaltschwellen.

Beim Umschalten von dem einen Förderelement auf das andere Förderelement kann es kurzzeitig zu instabilen Verhältnissen kommen. Um ein möglichst stabiles und stoßfreies Umschalten zu erreichen, wird derjenige Durchflussregler, dessen Förderelement nicht angesteuert wird, jeweils permanent nachgeführt. Es wird also demjenigen Durchflussregler, bei dem das Ansteuern des zugehörigen Förderelements unterdrückt wird, ein Nachführwert zugeführt. Der Nachführwert ergibt sich durch Multiplikation der Stellgröße desjenigen Durchflussreglers, dessen Förderelement von ihm angesteuert wird, mit einem jeweiligen vorbestimmten Faktor. Vorzugsweise entspricht der vorbestimmte Faktor für das eine Förderelement dem Quotienten des Nenndurchflusses des anderen Förderelements, dividiert durch den Nenndurchfluss des einen Förderelements. In analoger Weise entspricht vorzugsweise der vorbestimmte Faktor für das andere Förderelement dem Quotienten des Nenndurchflusses des einen Förderelements, dividiert durch den Nenndurchfluss des anderen Förderelements. In jedem Fall aber sind beiden Faktoren reziprok zueinander. Wenn also der eine Faktor mit f1 bezeichnet wird und der andere Faktor mit f2, so gilt f1*f2 = 1.

Zur Vermeidung von Überlastungen beim Anlaufen der Förderelemente ist vorzugsweise den Durchflussreglern ein jeweiliger Rampengeber zugeordnet. Mittels des jeweiligen Rampengebers wird, gerechnet ab dem Freigeben des Ansteuerns des jeweiligen Förderelements durch den jeweiligen Durchflussregler, eine Drehzahl des jeweiligen Förderelements gemäß einer vorbestimmten jeweiligen Rampe hochgefahren. Dadurch wird das Betriebsverhalten der Förderanordnung stabilisiert.

Vorzugsweise sind die beiden Durchflussregler miteinander gekoppelt, so dass sie nicht nur stets denselben Durchfluss-Sollwert und denselben Durchfluss-Istwert erhalten, sondern stets auch in derselben Betriebsart betrieben werden. Mögliche Betriebsarten sind insbesondere der Handbetrieb und der Automatikbetrieb. Im Handbetrieb wird einem der Förderelemente von einer Bedienperson eine Drehzahl vorgegeben. Im Automatikbetrieb erfolgt die Durchflussregelung gemäß dem Durchfluss-Sollwert und dem Durchfluss-Istwert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Teil einer technischen Anlage,
- FIG 2: eine Förderanordnung,
- FIG 3 bis 5: Zeitdiagramme und
- FIG 6: eine weitere Förderanordnung.

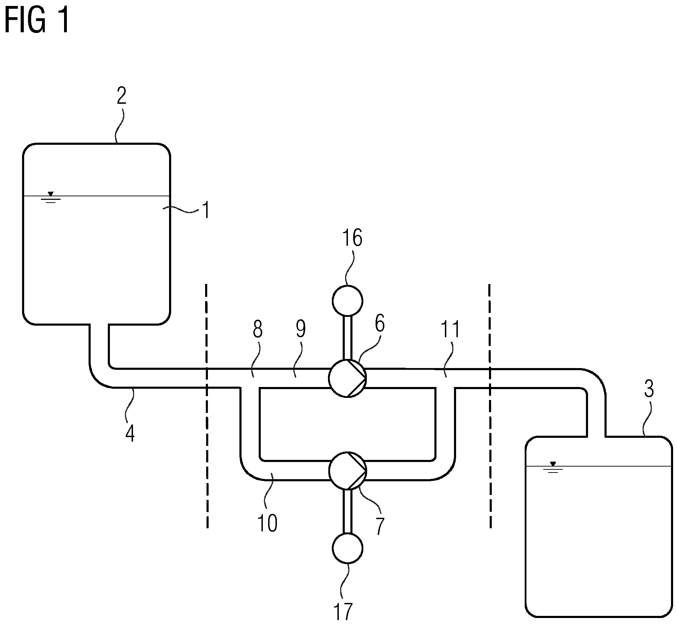

Gemäß FIG 1 soll ein Medium 1 von einem Quellort 2 zu einem Zielort 3 gefördert werden. Das Medium 1 ist in der Regel ein flüssiges Medium, beispielsweise Wasser oder Öl. Es kann sich im Einzelfall aber auch um ein gasförmiges Medium handeln.

Der Quellort 2 kann beispielsweise ein Tank sein, dem das Medium 1 entnommen wird. Der Zielort 3 kann beispielsweise ein Reaktor sein, in dem das Medium 1 mit mindestens einem anderen Medium gemischt oder anderweitig verarbeitet wird. Es sind aber auch andere Ausgestaltungen möglich.

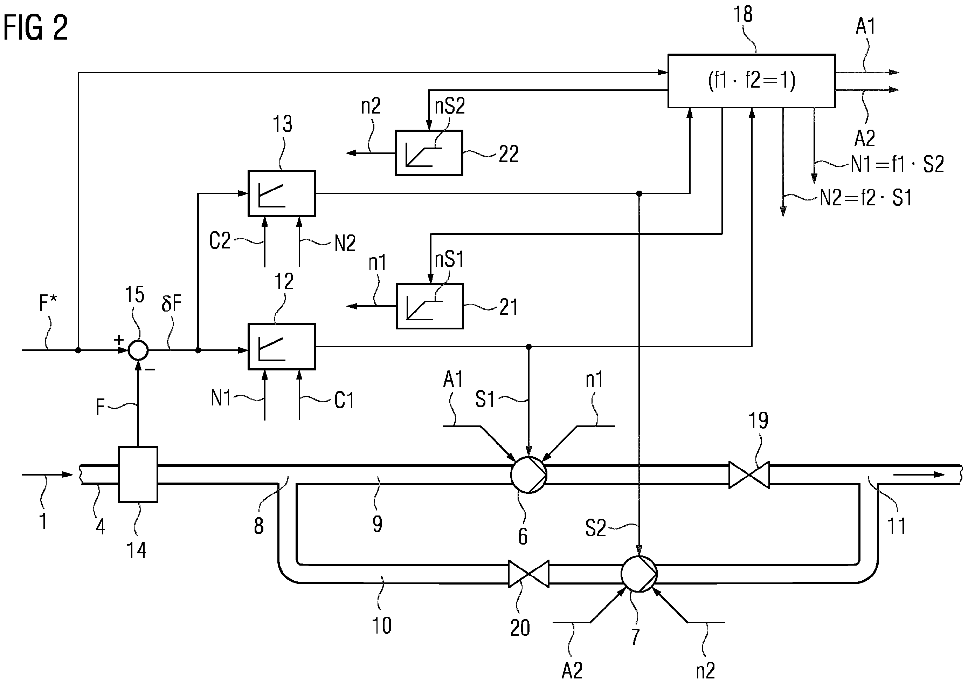

Zum Fördern des Mediums 1 vom Quellort 2 zum Zielort 3 weist eine Förderanordnung eine Förderleitung 4 auf. Die Förderleitung 4 weist zwischen dem Quellort 2 und dem Zielort 3 einen Förderabschnitt 5 auf. Der Förderabschnitt 5 ist in FIG 1 durch vertikale gestrichelte Linien begrenzt und in FIG 2 detaillierter dargestellt.

Gemäß den FIG 1 und 2 sind in dem Förderabschnitt 5 zwei Förderelemente 6, 7 angeordnet. Wenn das Medium 1 eine Flüssigkeit ist, sind die Förderelemente 6, 7 als Pumpen ausgebildet. In diesem Fall sind die Pumpen in der Regel als Kreiselpumpen ausgebildet. Wenn das Medium 1 ein Gas ist, können die Förderelemente 6, 7 beispielsweise als Kompressoren, Verdichter oder Gebläse ausgebildet sein. In jedem Fall sind die Förderelemente 6, 7 aber unterschiedlich dimensioniert.

Die Förderelemente 6, 7 sind einander parallel geschaltet. Der Förderabschnitt 5 weist also einen vorderen Knotenpunkt 8 auf, an dem die Förderleitung 4 sich in zwei Zweige 9, 10 gabelt. In jedem der beiden Zweige 9, 10 ist je eines der beiden Förderelemente 6, 7 angeordnet. Oftmals ist weiterhin ein hinterer Knotenpunkt 11 vorhanden, an dem die beiden Zweige 9, 10 sich wieder vereinigen.

Die Förderelemente 6, 7 werden gemäß FIG 2 von einem jeweiligen Durchflussregler 12, 13 geregelt. Die beiden Durchflussregler 12, 13 sind in der Regel als PI-Regler oder PID-Regler ausgebildet. Die Buchstaben P, I und D stehen in diesem Zusammenhang, wie allgemein bekannt für P = proportional, I = integral und D = differenzial.

Den Durchflussreglern 12, 13 wird ein Durchfluss-Sollwert F* zugeführt. Den Durchflussreglern 12, 13 wird weiterhin ein Durchfluss-Istwert F zugeführt. Der Durchfluss-Istwert F kann beispielsweise mittels eines Durchflusssensors 14 erfasst werden, der in der Förderleitung 4 angeordnet ist, und zwar entweder vor dem vorderen Knotenpunkt 8 oder - falls vorhanden - hinter dem hinteren Knotenpunkt 11.

Ersichtlich werden den Durchflussreglern 12, 13 derselbe Durchfluss-Sollwert F* und derselbe Durchfluss-Istwert F zugeführt. Der Durchfluss-Sollwert F* und der Durchfluss-Istwert F sind also für beide Durchflussregler 12, 13 einheitlich. Weiterhin kann den Durchflussreglern 12, 13 ein Summationspunkt 15 vorgeordnet sein, in dem die Regeldifferenz δF gebildet wird, also die von Durchfluss-Sollwert F* und Durchfluss-Istwert F. In diesem Fall kann den Durchflussreglern 12, 13 die Regeldifferenz δF zugeführt werden. Alternativ kann die Regeldifferenz δF auch innerhalb der Durchflussregler 12, 13 gebildet werden.

Die beiden Durchflussregler 12, 13 arbeiten gemäß einem jeweiligen Regelalgorithmus C1, C2. Die beiden Regelalgorithmen C1, C2 legen beispielsweise fest, ob der jeweilige Durchflussregler 12, 13 als P-Regler, als PI-Regler, als PID-Regler usw. arbeitet, welche Größe die Proportionalverstärkung aufweist, welche Nachstellzeit der Integralanteil aufweist usw.. Die beiden Regelalgorithmen C1, C2 sind individuell und unabhängig voneinander auf die optimale Ansteuerung des jeweiligen Förderelements 6, 7 abgestimmt. Jeder der beiden Durchflussregler 12, 13 ermittelt unter Verwendung seines Regelalgorithmus C1, C2 anhand des Durchfluss-Sollwerts F* und des Durchfluss-Istwerts F (bzw. der Regeldifferenz δF) eine jeweilige Stellgröße S1, S2 für das von ihm geregelte Förderelement 6, 7. Die jeweilige Stellgröße S1, S2 kann insbesondere eine jeweilige Solldrehzahl sein. Die Durchflussregler 12, 13 steuern das jeweilige Förderelement 6, 7 - genauer: den Antrieb 16, 17 (siehe FIG 1) des jeweiligen Förderelements 6, 7 - entsprechend ihrer jeweiligen Stellgröße S1, S2 an. Die Förderelemente 6, 7 bzw. deren Antriebe 16, 17 sind also drehzahlregelbar. Die Antriebe 16, 17 können insbesondere als elektrische Antriebe ausgebildet sein. In diesem Fall können die Antriebe 16, 17 beispielsweise über einen jeweiligen Umrichter (in den FIG nicht dargestellt) gespeist werden.

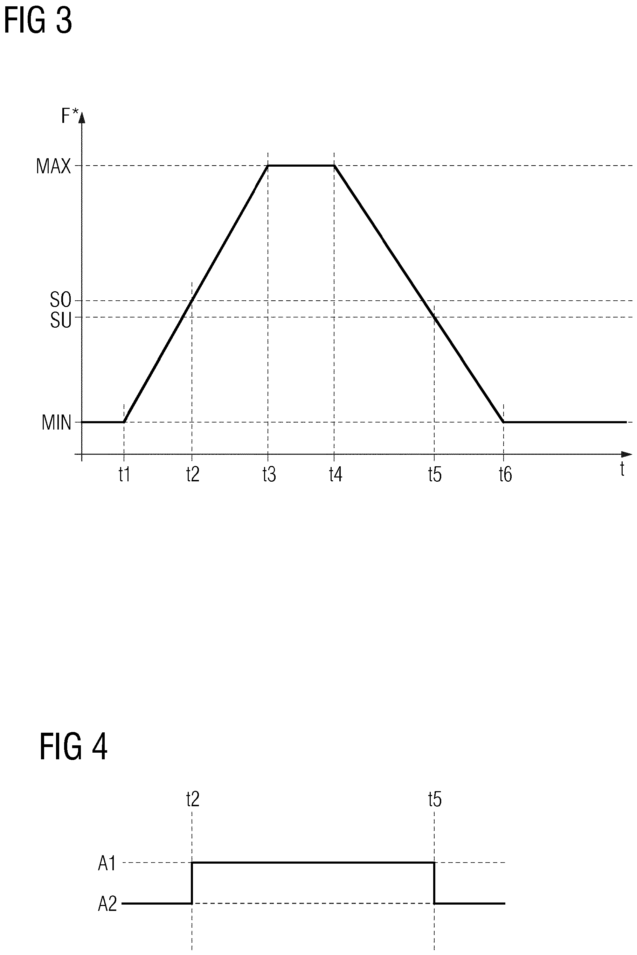

Von den beiden Förderelementen 6, 7 ist jeweils nur eines aktiv. Zur Aktivierung und Deaktivierung der Förderelemente 6, 7 weist die Förderanordnung eine Umschalteinrichtung 18 auf. Der Umschalteinrichtung 18 wird insbesondere der Durchfluss-Sollwert F* zugeführt. Die Umschalteinrichtung 18 ist derart ausgebildet, dass sie - je nach dem Wert des Durchfluss-Sollwerts F* - das Ansteuern eines der Förderelemente 6, 7 durch den entsprechenden Durchflussregler 12, 13 freigibt und das Ansteuern des anderen der beiden Förderelemente 7, 6 durch den entsprechenden Durchflussregler 13, 12 unterdrückt. Dies wird nachstehend unter zusätzlicher Bezugnahme auf die FIG 3 und 4 näher erläutert. Das Freigeben und das Unterdrücken der Ansteuerung der Förderelemente 6, 7 (bzw. von deren Antriebe 16, 17) kann beispielsweise dadurch bewirkt werden, dass die Umschalteinrichtung 18 ein jeweiliges Aktivierungssignal A1, A2 an die beiden Förderelemente 6, 7 ausgibt. Zu einem beliebigen Zeitpunkt wird hierbei nur an eines der beiden Förderelemente 6, 7 das entsprechende Aktivierungssignal A1, A2 ausgegeben. Bei Abschalten des jeweiligen Aktivierungssignals A1, A2 wird das jeweilige Förderelement 6, 7 völlig abgeschaltet.

Gemäß FIG 3 weist der Durchfluss-Sollwert F* zu einem Zeitpunkt t1 einen Minimalwert MIN auf. Nach dem Zeitpunkt t1 steigt der Durchfluss-Sollwert F* als Funktion der Zeit t nach und nach auf einen Maximalwert MAX an. Konkret erreicht der Durchfluss-Sollwert F* zu einem Zeitpunkt t2 eine obere Schaltschwelle SO und zu einem Zeitpunkt t3 den Maximalwert MAX. Ab einem Zeitpunkt t4 sinkt der Durchfluss-Sollwert F* wieder auf den Minimalwert MIN ab. Konkret erreicht der Durchfluss-Sollwert F* zu einem Zeitpunkt t5 eine untere Schaltschwelle SU und zu einem Zeitpunkt t6 den Minimalwert MIN.

Zum Zeitpunkt t1 wird entsprechend der Darstellung in FIG 4 das Aktivierungssignal A2 ausgegeben, so dass das Förderelement 7 entsprechend dem von dem Durchflussregler 13 ermittelten Stellsignal S2 angesteuert wird. Hiermit korrespondierend wird das Aktivierungssignal A1 nicht ausgegeben.

Dieser Zustand wird beibehalten, bis der Durchfluss-Sollwert F* zum Zeitpunkt t2 die obere Schaltschwelle SO erreicht. Mit dem Überschreiten der oberen Schaltschwelle SO wird vom Aktivierungssignal A2 auf das Aktivierungssignal A1 umgeschaltet. Dadurch wird erreicht, dass nunmehr das Förderelement 6 von dem Durchflussregler 12 entsprechend dem von ihm ermittelten Stellsignal S1 angesteuert wird und das Förderelement 7 von dem Durchflussregler 13 nicht mehr angesteuert wird.

Dieser Zustand wird beibehalten, bis der Durchfluss-Sollwert F* zum Zeitpunkt t5 die untere Schaltschwelle SU erreicht. Mit dem Unterschreiten der unteren Schaltschwelle SU wird vom Aktivierungssignal A1 zum Aktivierungssignal A2 zurück gewechselt.

Im Ergebnis wird dadurch erreicht, dass das Medium 1 ausschließlich über dasjenige Förderelement 6, 7 fließt, dem das entsprechende Aktivierungssignal A1, A2 zugeführt wird. Insbesondere fließt das Medium 1 somit ausschließlich über das Förderelement 6, solange der Durchfluss-Sollwert F* oberhalb der oberen Schaltschwelle SO und unterhalb des Maximalwerts MAX bleibt. Ebenso fließt das Medium 1 ausschließlich über das Förderelement 7, solange der Durchfluss-Sollwert F* unterhalb der unteren Schaltschwelle SU und oberhalb des Minimalwerts MIN bleibt.

Zum vollständigen Unterdrücken jeglichen Fließens des Mediums 1 über das nicht angesteuerte Förderelement 6, 7 kann in den beiden Zweigen 9, 10 jeweils ein Sperrelement 19, 20 angeordnet sein, beispielsweise ein entsprechendes Ventil. Das jeweilige Sperrelement 19, 20 wird in diesem Fall von der Umschalteinrichtung 18 permanent vollständig geöffnet gehalten, solange dem im gleichen Zweig 9, 10 angeordneten Förderelement 6, 7 sein Aktivierungssignal A1, A2 zugeführt wird. Wird dem jeweiligen Förderelement 6, 7 sein jeweiliges Aktivierungssignal A1, A2 nicht zugeführt, wird das jeweilige Sperrelement 19, 20 geschlossen.

Um ein möglichst stoßfreies Umschalten von dem einen Förderelement 6 auf das andere Förderelement 7 und umgekehrt zu ermöglichen, wird dem Durchflussregler 12 immer dann, wenn das von ihm geregelte Förderelement 6 nicht angesteuert wird, ein Nachführwert N1 zugeführt. In analoger Weise wird dem Durchflussregler 13 immer dann, wenn das von ihm geregelte Förderelement 7 nicht angesteuert wird, ein Nachführwert N2 zugeführt. Die Nachführwerte N1, N2 legen fest, mit welchem Wert für den Integralanteil der jeweilige Durchflussregler 12, 13 zu dem Zeitpunkt, zu dem er aktiviert wird (also das Ausgeben der von ihm ermittelten Stellgröße S1, S2 an das entsprechende Förderelement 6, 7 freigegeben wird), initialisiert wird. Bei dem Beispiel gemäß den FIG 3 und 4 ist dies für den Durchflussregler 12 der Zeitpunkt t2. Für den Durchflussregler 13 ist dies der Zeitpunkt t5. Insbesondere wird der Integralanteil des jeweiligen Durchflussregler 12, 13 derart ermittelt, dass die Stellgröße S1, S2 des jeweiligen Durchflussreglers 12, 13 zum Zeitpunkt t2 bzw. t5 des Umschaltens gleich dem jeweiligen Nachführwert N1, N2 ist.

Die Nachführwerte N1, N2 werden gemäß FIG 2 von der Umschalteinrichtung 18 ermittelt. Sie könnten aber auch von einer anderen Einrichtung ermittelt werden. Die Ermittlung erfolgt dadurch, dass der jeweilige Nachführwert N1 bzw. N2 sich durch Multiplikation der Stellgröße S2 bzw. S1 des jeweils anderen Durchflussreglers 13, 12 mit einem jeweiligen vorbestimmten Faktor f1, f2 ergibt. Es gilt also N1 = f1*S2 und N2 = f2*S1. Bei der Ermittlung der Nachführwerte N1 bzw. N2 werden weiterhin Stellgrößenbegrenzungen der Durchflussregler 12, 13 beachtet. Die beiden Faktoren f1, f2 sind reziprok zueinander. Es gilt also f1*f2 = 1 bzw. f2 = 1/f1.

Die beiden Faktoren f1, f2 können nach Bedarf bestimmt werden. Vorzugsweise erfolgt die Bestimmung jedoch anhand der Nenndurchflüsse der entsprechenden Förderelemente 6, 7. Wenn der Nenndurchfluss des Förderelements 6 mit FN1 bezeichnet wird und der Nenndurchfluss des Förderelements 7 mit FN2, gilt vorzugsweise f1 = FN2/FN1 und demzufolge umgekehrt f2 = FN1/FN2.

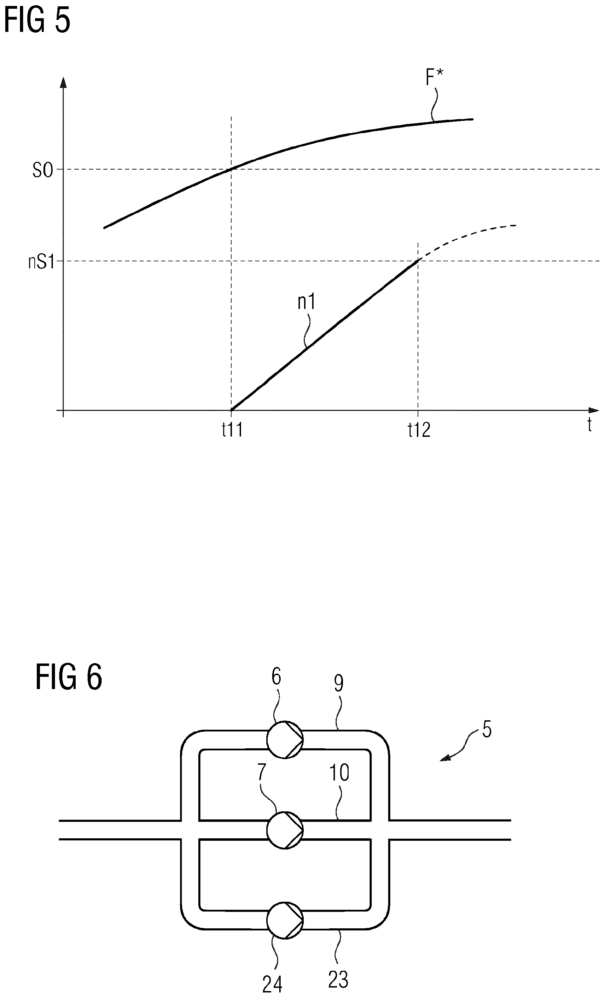

Nach dem Umschalten der Förderelemente 6, 7 benötigt das neu aktivierte Förderelement 6, 7 eine bestimmte Zeit, bis es die gewünschte Drehzahl (wie sie durch die jeweilige Stellgröße S1, S2 bzw. den entsprechenden Nachführwert N1, N2 gegeben ist) erreicht hat. Da das neu aktivierte Förderelement 6, 7 gegen Widerstand hochläuft, kann es überlastet werden, wenn die eigentlich gewünschte Drehzahl zu schnell angefahren wird. Aus diesem Grund ist den Förderelementen 6, 7 entsprechend der Darstellung in FIG 2 ein jeweiliger Rampengeber 21, 22 zugeordnet. Die Rampengeber 21, 22 können beispielsweise, wenn die Förderelemente 6, 7 mittels umrichtergespeister Antriebe angetrieben werden, in den Umrichtern angeordnet sein. Mittels des jeweiligen Rampengebers 21, 22 wird, gerechnet ab dem Aktivieren des jeweiligen Förderelements 6, 7, eine Drehzahl des jeweiligen Förderelements 6, 7 gemäß einer vorbestimmten jeweiligen Rampe hochgefahren. Das Hochfahren erfolgt bis zu einer Grenzdrehzahl. Die Grenzdrehzahl kann beispielsweise durch den Nachführwert N1, N2 zum Zeitpunkt der Aktivierung des entsprechenden Förderelements 6, 7 bestimmt sein. Nach dem Durchlaufen der jeweiligen Rampe wird der jeweilige Rampengeber 21, 22 wieder inaktiv geschaltet. Ab diesem Zeitpunkt erfolgt sodann die normale Ansteuerung des jeweiligen Förderelements 6, 7 durch den jeweiligen Durchflussregler 12, 13. Dies wird nachstehend in Verbindung mit FIG 5 für das Förderelement 6 und dessen Durchflussregler 12 näher erläutert.

FIG 5 zeigt beispielhaft einen möglichen zeitlichen Verlauf des Durchfluss-Sollwertes F*. Gemäß FIG 5 steigt der Durchfluss-Sollwert F* im Laufe der Zeit t zu einem Zeitpunkt t11 über den oberen Schwellenwert SO an. Zum Zeitpunkt t11 wird von dem Förderelement 7 auf das Förderelement 6 umgeschaltet. Ab dem Zeitpunkt t11 wird somit insbesondere die Ansteuerung des Förderelements 7 unterdrückt und stattdessen das Förderelement 6 angesteuert. Der obere Schwellenwert SO im stabilen Zustand korrespondiert mit einer spezifischen Drehzahl nS1. Der Rampengeber 21 gibt, beginnend mit dem Zeitpunkt t11, einen Drehzahlsollwert n1 entsprechend seiner Rampe aus. Der Drehzahlsollwert n1 steigt entsprechend der Darstellung in FIG 5 ab dem Zeitpunkt t11 linear an, bis zu einem Zeitpunkt t12 das Ende der Rampe erreicht wird. Erst zu diesem Zeitpunkt wird das Ausgeben der "normalen" Stellgröße S1 an das Förderelement 6 freigegeben.

Für das Förderelement 7 und dessen Durchflussregler 13, also für das inverse Umschalten, gelten analoge Ausführungen. Die Dauer des Hochlaufs und die spezifische Drehzahl nS2 für den Drehzahlsollwert n2 gemäß der Rampe des Rampengebers 22 können jedoch von den korrespondierenden Werten des Rampengebers 21 abweichen.

Die steuerungstechnische Einbindung der regelungstechnischen Implementierung der Förderanordnung, also der beiden Durchflussregler 12, 13 in eine umfassendere Prozesssteuerung, ist ohne weiteres möglich. Insbesondere ist es möglich, im Rahmen des Prozesssteuerungssystems die beiden Reglerinstanzen, mittels derer die Durchflussregler 12, 13 realisiert werden, intern so zu verschalten, so dass ihnen stets derselbe Durchfluss-Sollwert F* und stets derselbe Durchfluss-Istwert F bzw. stets dieselbe Regeldifferenz δF zugeführt wird. Weiterhin können die beiden Durchflussregler 12, 13 im Prozesssteuerungssystem auch ohne weiteres miteinander gekoppelt sein, so dass sie nicht nur stets denselben Durchfluss-Sollwert F* und denselben Durchfluss-Istwert F erhalten, sondern stets auch in derselben Betriebsart (also Automatikbetrieb oder Handbetrieb) betrieben werden. Im Rahmen eines Bedien- und Beobachtungssystems ist es weiterhin möglich, für den Förderabschnitt 5 nur einen einzelnen Durchflussregler darzustellen, der (scheinbar) nur ein einziges Förderelement regelt. In der Regel wird dies der Durchflussregler 12, 13 für das Förderelement 6, 7 mit dem größeren Nenndurchfluss sein. Es ist jedoch ebenso möglich, den Förderabschnitt 5 so darzustellen, wie er ist (also mit den beiden Zweigen 9, 10 und den darin angeordneten Förderelementen 6, 7). In diesem Fall wird jedoch in der Regel nur ein einzelner Durchflussregler für beide Förderelemente 6, 7 dargestellt. Die letztgenannte Darstellung kann alternativ permanent sein oder beispielsweise im Falle einer Fehlfunktion einer der beiden Förderelemente 6, 7 anstelle der erstgenannten Darstellung ausgegeben werden.

Es ist auch ohne weiteres eine Erweiterung der Förderanordnung auf drei, vier usw. parallel geschaltete Förderelemente möglich. Dies wird nachstehend kurz für eine Erweiterung auf drei Förderelemente kurz skizziert.

Man nehme also an, man habe entsprechend der Darstellung in FIG 6 eine Konfiguration einer Förderanordnung, bei welcher der Förderabschnitt 5 zusätzlich zu den Zweigen 9, 10 mit den Förderelementen 6, 7 einen weiteren Zweig 23 aufweist, in dem ein weiteres Förderelement 24 angeordnet ist. Ohne Beschränkung der Allgemeinheit kann angenommen werden, dass das Förderelement 7 das Förderelement mit dem kleineren Nenndurchfluss ist und dass das weitere Förderelement 24 einen Nenndurchfluss aufweist, der kleiner als der Nenndurchfluss des kleineren Förderelements 7 ist. In diesem Fall kann das Umschalten zwischen den Förderelementen 6, 7, so wie es obenstehend in den FIG 3 bis 5 erläutert wurde, unverändert beibehalten werden. Ein weiteres Umschalten zwischen dem kleineren Förderelement 7 und dem weiteren Förderelement 24 kann völlig analog zu den Ausführungen zu den FIG 3 bis 5 erfolgen. Es müssen jedoch, soweit es das Zusammenspiel des Förderelements 7 und des weiteren Förderelements 24 betrifft, folgende Ersetzungen vorgenommen werden:
- Der Maximalwert für das Zusammenspiel des Förderelements 7 und des weiteren Förderelements 24 ist gleich der oberen oder der unteren Schaltschwelle SO, SU für das Zusammenspiel der Förderelemente 6 und 7.
- Die obere oder die untere Schaltschwelle für das Zusammenspiel des Förderelements 7 und des weiteren Förderelements 24 ist gleich dem Minimalwert MIN.
- Der Minimalwert für das weitere Förderelement 24 ist (hinreichend) klein zu wählen.

In völlig analoger Weise können auch weitere Erweiterungen um noch mehr Förderelemente erfolgen.

Zusammengefasst betrifft die vorliegende Erfindung somit folgenden Sachverhalt:
Über eine Förderleitung 4 wird ein Medium 1 von einem Quellort 2 zu einem Zielort 3 gefördert. Die Förderleitung 4 weist zwischen dem Quellort 2 und dem Zielort 3 einen Förderabschnitt 5 auf, in dem zwei Förderelemente 6, 7 angeordnet sind. Die Förderelemente 6, 7 sind einander parallel geschaltet und werden von einem jeweiligen Durchflussregler 12, 13 geregelt. Beiden Durchflussreglern 12, 13 werden derselbe Durchfluss-Sollwert F* und derselbe Durchfluss-Istwert F zugeführt. Sie ermitteln daraus eine jeweilige Stellgröße S1, S2 für das jeweilige Förderelement 6, 7. Eine Umschalteinrichtung 18 der Förderanordnung ist derart ausgebildet, dass sie bei einem Absinken des Durchfluss-Sollwerts F* unter eine untere Schaltschwelle SU das Ansteuern des einen Förderelements 6 durch den einen Durchflussregler 12 unterdrückt und das Ansteuern des anderen Förderelements 7 durch den anderen Durchflussregler 13 freigibt, so dass das Medium 1 ausschließlich über das andere Förderelement 7 fließt, solange der Durchfluss-Sollwert F* oberhalb eines Minimalwerts MIN und unterhalb einer oberen Schaltschwelle SO bleibt. In analoger Weise wird bei einem Ansteigen des Durchfluss-Sollwerts F* über die obere Schaltschwelle SO das Ansteuern des anderen Förderelements 7 durch den anderen Durchflussregler 13 unterdrückt und das Ansteuern des einen Förderelements 6 durch den einen Durchflussregler 12 freigegeben, so dass das Medium 1 ausschließlich über das eine Förderelement 6 fließt, solange der Durchfluss-Sollwert F* unterhalb eines Maximalwerts MAX und oberhalb der unteren Schaltschwelle SU bleibt.

Die vorliegende Erfindung weist folgende Vorteile auf: Der tatsächliche Durchfluss F des Mediums 1 lässt sich auf energieeffiziente Weise präzise regeln. Aufgrund der Verwendung eigener Durchflussregler 12, 13 wird eine hohe Regelgüte erreicht. Durch das Nachführen des jeweils nicht aktiven Durchflussreglers 12, 13 können ein Integrator-Windup der Durchflussregler 12, 13 vermieden werden und ein zumindest nahezu stoßfreier Übergang beim Wechsel der Förderelemente 6, 7 erreicht werden. Für den Bediener des Systems ergeben sich hingegen kaum Änderungen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Förderanordnung für ein Medium (1),
- wobei die Förderanordnung eine Förderleitung (4) aufweist, über die das Medium (1) von einem Quellort (2) zu einem Zielort (3) gefördert wird,
- wobei die Förderleitung (4) zwischen dem Quellort (2) und dem Zielort (3) einen Förderabschnitt (5) aufweist,
- wobei in dem Förderabschnitt (5) zwei Förderelemente (6, 7) angeordnet sind, die als Pumpen, Kompressoren, Verdichter oder Gebläse ausgebildet sind,
- wobei die Förderelemente (6, 7) einander parallel geschaltet sind,
- wobei die Förderelemente (6, 7) von einem jeweiligen Durchflussregler (12, 13) geregelt werden,
- wobei beiden Durchflussreglern (12, 13) ein für beide Durchflussregler (12, 13) einheitlicher Durchfluss-Sollwert (F*) und ein für beide Durchflussregler (12, 13) einheitlicher Durchfluss-Istwert (F) zugeführt werden,
- wobei die Durchflussregler (12, 13) anhand des Durchfluss-Sollwerts (F*) und des Durchfluss-Istwerts (F) unter Verwendung eines jeweiligen Regelalgorithmus (C1, C2) eine jeweiligen Stellgröße (S1, S2) für das jeweilige Förderelement (6, 7) berechnen,
- wobei die Fördereinrichtung eine Umschalteinrichtung (18) aufweist, welcher der Durchfluss-Sollwert (F*) zugeführt wird,
- wobei die Umschalteinrichtung (18) derart ausgebildet ist, dass zu jedem Zeitpunkt nur eines der beiden Förderelemente (6, 7) entsprechend der Stellgröße (S1, S2) des zugehörigen Durchflussreglers (12, 13) gesteuert wird, während das andere Förderelement (6, 7) nicht angesteuert wird,
- wobei die Umschalteinrichtung (18) derart ausgebildet ist, dass sie bei einem Absinken des Durchfluss-Sollwerts (F*) unter eine untere Schaltschwelle (SU) das Ansteuern des einen Förderelements (6) durch den einen Durchflussregler (12) unterdrückt und das Ansteuern des anderen Förderelements (7) durch den anderen Durchflussregler (13) freigibt, so dass das Medium (1) ausschließlich über das andere Förderelement (7) fließt, solange der Durchfluss-Sollwert (F*) oberhalb eines Minimalwerts (MIN) und unterhalb einer oberen Schaltschwelle (SO) bleibt, und
- wobei die Umschalteinrichtung (18) derart ausgebildet ist, dass sie bei einem Ansteigen des Durchfluss-Sollwerts (F*) über die obere Schaltschwelle (SO) das Ansteuern des anderen Förderelements (7) durch den anderen Durchflussregler (13) unterdrückt und das Ansteuern des einen Förderelements (6) durch den einen Durchflussregler (12) freigibt, so dass das Medium (1) ausschließlich über das eine Förderelement (6) fließt, solange der Durchfluss-Sollwert (F*) unterhalb eines Maximalwerts (MAX) und oberhalb der unteren Schaltschwelle (SU) bleibt.

2. Förderanordnung nach Anspruch 1,
**dadurch gekennzeichnet ,**
- **dass** demjenigen Durchflussregler (12, 13), bei dem das Ansteuern des zugehörigen Förderelements (6, 7) unterdrückt wird, ein Nachführwert (N1, N2) zugeführt wird,
- **dass** der Nachführwert (N1, N2) sich durch Multiplikation der Stellgröße (S2, S1) desjenigen Durchflussreglers (13, 12), dessen Förderelement (7, 6) von ihm angesteuert wird, mit einem jeweiligen vorbestimmten Faktor (f2, f1) ergibt, und
- **dass** die beiden Faktoren (f1, f2) reziprok zueinander sind.

3. Förderanordnung nach Anspruch 1 oder 2,
**dadurch gekennzeichnet**
**dass** den Durchflussreglern (12, 13) ein jeweiliger Rampengeber (21, 22) zugeordnet ist, mittels dessen, gerechnet ab dem Freigeben des Ansteuerns des jeweiligen Förderelements (6, 7) durch den jeweiligen Durchflussregler (12, 13), eine Drehzahl des jeweiligen Förderelements (6, 7) gemäß einer vorbestimmten jeweiligen Rampe hochgefahren wird.

4. Förderanordnung nach Anspruch 1, 2 oder 3,
**dadurch gekennzeichnet ,**
**dass** die beiden Durchflussregler (12, 13) miteinander gekoppelt sind, so dass sie nicht nur stets denselben Durchfluss-Sollwert (F*) und denselben Durchfluss-Istwert (F) erhalten, sondern stets auch in derselben Betriebsart betrieben werden.

## Claims

1. Conveyor assembly for a medium (1),
- wherein the conveyor assembly has a conveyor line (4) via which the medium (1) is conveyed from a source location (2) to a destination (3),
- wherein the conveyor line (4) has a conveyor section (5) between the source location (2) and the destination (3),
- wherein two conveyor elements (6, 7), which are embodied as pumps, compressors, condensers or fans, are arranged in the conveyor section (5),
- wherein the conveyor elements (6, 7) are connected in parallel with one another,
- wherein the conveyor elements (6, 7) are controlled by a respective flow controller (12, 13),
- wherein a target flow value (F*) which is uniform for both flow controllers (12, 13) and an actual flow value (F) which is uniform for both flow controllers (12, 13) are supplied to both flow controllers (12, 13),
- wherein the flow controllers (12, 13) calculate a respective manipulated variable (S1, S2) for the respective conveyor element (6, 7) on the basis of the target flow value (F*) and the actual flow value (F) using a respective control algorithm (C1, C2),
- wherein the conveying device has a changeover device (18) to which the target flow value (F*) is supplied,
- wherein the changeover device (18) is embodied such that only one of the two conveyor elements (6, 7) is controlled according to the manipulated variable (S1, S2) of the associated flow controller (12, 13) at each time, while the other conveyor element (6, 7) is not actuated,
- wherein the changeover device (18) is embodied such that, if the target flow value (F*) falls below a lower changeover threshold (SU), it suppresses the actuation of the one conveyor element (6) by the one flow controller (12) and releases the actuation of the other conveyor element (7) by the other flow controller (13) so that the medium (1) flows solely via the other conveyor element (7) as long as the target flow value (F*) remains above a minimum value (MIN) and below an upper changeover threshold (SO), and
- wherein the changeover device (18) is embodied such that, if the target flow value (F*) exceeds the upper changeover threshold (SO), it suppresses the actuation of the other conveyor element (7) by the other flow controller (13) and releases the actuation of the one conveyor element (6) by the one flow controller (12), so that the medium (1) flows solely via the one conveyor element (6) as long as the target flow value (F*) remains below a maximum value (MAX) and above the lower changeover threshold (SU).

2. Conveyor assembly according to claim 1,
**characterised in that**
- a tracking value (N1, N2) is supplied to the flow controller (12, 13) for which the actuation of the associated conveyor element (6, 7) is suppressed,
- the tracking value (N1, N2) is obtained by multiplying the manipulated variable (S2, S1) of the flow controller (13, 12) which actuates its conveyor element (7, 6) by a respective predetermined factor (f2, f1), and
- the two factors (f1, f2) are reciprocal to one another.

3. Conveyor assembly according to claim 1 or 2,
**characterised in that**
the flow controllers (12, 13) are assigned a respective ramp generator (21, 22) by means of which, calculated from the release of the actuation of the respective conveyor element (6, 7) by the respective flow controller (12, 13), a speed of the respective conveyor element (6, 7) is ramped up in accordance with a predetermined respective ramp.

4. Conveyor assembly according to claim 1, 2 or 3,
**characterised in that**
the two flow controllers (12, 13) are coupled to one another so that they not only always receive the same target flow value (F*) and the same actual flow value (F), but are also always operated in the same operating mode.

## Revendications

1. Agencement de refoulement d'un fluide (1),
- dans lequel l'agencement de refoulement a un conduit (4) de refoulement, par lequel le fluide (1) est refoulé d'un lieu (2) de source à un lieu (3) de destination,
- dans lequel le conduit (4) de refoulement a un tronçon (5) de refoulement entre le lieu (2) de source et le lieu (3) de destination,
- dans lequel, dans le tronçon (5) de refoulement, sont montés deux éléments (6, 7) de refoulement, qui sont constitués sous la forme de pompes, de compresseurs, de condenseurs ou de soufflantes,
- dans lequel les éléments (6, 7) de refoulement sont montés en parallèle l'un avec l'autre,
- dans lequel les éléments (6, 7) de refoulement sont réglés par un régleur (12, 13) respectif de débit,
- dans lequel il est envoyé, aux deux régleurs (12, 13) de débit, une valeur (F*) de consigne de débit unitaire pour les deux régleurs (12, 13) de débit et une valeur (F) réelle de débit unitaire pour les deux régleurs (12, 13) de débit,
- dans lequel les régleurs (12, 13) de débit calculent, à l'aide de la valeur (F*) de consigne de débit et de la valeur (F) réelle de débit en utilisant un algorithme (C1, C2) de réglage respective, une grandeur (S1, S2) réglante respective pour l'élément (6, 7) respectif de refoulement,
- dans lequel le dispositif de refoulement a un dispositif (18) de commutation, auquel est envoyée la valeur (F*) de consigne de débit,
- dans lequel le dispositif (18) de commutation est constitué, de manière à commander, à chaque instant, seulement l'un des deux éléments (6, 7) de refoulement conformément à la grandeur (S1, S2) réglante du régleur (12, 13) de débit lui appartenant, tandis que l'autre élément (6, 7) de refoulement n'est pas commandé,
- dans lequel le dispositif (18) de commutation est constitué de manière à supprimer, lorsque la valeur (F*) de consigne de débit s'abaisse en-dessous d'un seuil (SU) inférieur de commutation, la commande de l'un des éléments (6) de refoulement par le un régleur (12) de débit, et à valider la commande de l'autre élément (7) de refoulement par l'autre régleur (13) de débit, de manière à ce que le fluide (1) passe exclusivement par l'autre élément (7) de refoulement, tant que la valeur (F*) de consigne de débit reste au-dessus d'une valeur (MIN) minimum et en-dessous d'un seuil (SO) de commutation supérieur, et
- dans lequel le dispositif (18) de commutation est constitué de manière à supprimer, lorsque la valeur (F*) de consigne de débit s'élève au-dessus de la valeur (SO) de commutation supérieure, la commande de l'autre élément (7) de refoulement par l'autre régleur (13) de débit et à valider la commande du un élément (6) de refoulement par le un régleur (12) de débit, de manière à ce que le fluide (1) passe exclusivement par le un élément (6) de refoulement, tant que la valeur (F*) de consigne de débit reste en-dessous d'une valeur (MAX) maximum et au-dessus du seuil (SU) de commutation inférieur.

2. Agencement de refoulement suivant la revendication 1, **caractérisé**
- **en ce que** l'on envoie une valeur (N1, N2) d'adaptation au régleur (12, 13) de débit respectif, pour lequel la commande de l'élément (6, 7) de refoulement, qui lui appartient, est supprimée,
- **en ce que** l'on obtient la valeur (N1, N2) d'adaptation en multipliant la grandeur (S2, S1) réglante du régleur (13, 12) de débit, dont l'élément (7, 6) de refoulement est par lui commandé, par un facteur (f2, f1) respectif déterminé à l'avance, et
- **en ce que** les deux facteurs (f1, f2) sont réciproques l'un par rapport à l'autre.

3. Agencement de refoulement suivant la revendication 1 ou 2, **caractérisé**
**en ce que**, aux régleurs (12, 13) de débit, est affecté un émetteur (21, 22) de rampe respectif au moyen duquel, calculée à partir de la validation de la commande de l'élément (6, 7) de refoulement respectif par le régleur (12, 13) de débit respectif, une vitesse de rotation de l'élément (6, 7) respectif de refoulement est démarrée suivant une rampe respective déterminée à l'avance.

4. Agencement de refoulement suivant la revendication 1, 2 ou 3,
**caractérisé**
**en ce que** les deux régleurs (12, 13) de débit sont couplés l'un à l'autre, de manière à obtenir non seulement toujours la même valeur (F*) de consigne de débit et la même valeur (F) réelle de débit, mais également de manière à ce qu'ils fonctionnent aussi toujours dans le même type de fonctionnement.
